# EUROPÄISCHE PATENTSCHRIFT

(11) **EP 3 080 411 B1**
(45) Veröffentlichungstag und Bekanntmachung des Hinweises auf die Patenterteilung: **06.09.2017**
(21) Anmeldenummer: 14767025.1
(22) Anmeldetag: 19.09.2014
(51) Int. Cl.: F01N 3/22, F02M 26/53, F16K 27/02, F16K 31/06

(54) **AKTOR FÜR VENTILE IN VERBRENNUNGSKRAFTMASCHINEN**
ACTUATOR FOR VALVES IN INTERNAL COMBUSTION ENGINES
ACTIONNEUR POUR SOUPAPES DANS UN MOTEUR À COMBUSTION INTERNE

(30) Priorität: 24.10.2013 DE 102013111724
(43) Veröffentlichungstag der Anmeldung: 19.10.2016
(73) Patentinhaber: Pierburg GmbH, 41460 Neuss (DE)
(72) Erfinder: HERRMANN, Berthold, 41462 Neuss (DE); OZDYK, Björn Jonas, 40229 Düsseldorf (DE); PAFFRATH, Holger, 50259 Pulheim (DE); CELIK, Halim, 50354 Hürth (DE)
(74) Vertreter: Patentanwälte ter Smitten Eberlein-Van Hoof Rütten Partnerschaftsgesellschaft mbB
(86) Internationale Anmeldenummer: PCT/EP2014/070009
(87) Internationale Veröffentlichungsnummer: WO 2015/058915

(56) Entgegenhaltungen:
- EP-A2- 2 597 294
- DE-A1-102008 050 252
- US-A- 6 076 550
- US-B1- 6 178 956

## Beschreibung

Die Erfindung betrifft einen Aktor für Ventile in Verbrennungskraftmaschinen mit einem Elektromagneten, einem Aktorgehäuse, in welchem der Elektromagnet angeordnet ist und einer Jochplatte des Elektromagneten, welche an einem axialen Ende des Aktorgehäuses angeordnet ist.

Derartige elektromagnetische Aktoren dienen zur Betätigung von Ventilen, wie beispielsweise Abgasrückführventilen zur Regelung der in den Verbrennungsraum zurückgeführten Abgasmenge oder Sekundärluftventilen zur Regelung der in den Abgasstrang eingebrachten Sekundärluftmenge, die zur Schadstoffminderung in Verbrennungsmotoren eingesetzt werden.

Bei diesen Ventilen wird üblicherweise das Aktorgehäuse über eine Flanschverbindung mittels Schrauben unter Zwischenlage einer Dichtung axial am Strömungsgehäuse befestigt. Häufig bildet bei den elektromagnetischen Ventilen eine Lochplatte den axialen Abschluss des Aktors, so dass der Aktor mit seiner zum Strömungsgehäuse weisenden Seite durch die Jochplatte, in deren Innern der Kern des elektromagnetischen Kreises angeordnet sein, begrenzt wird. Entsprechend dient die Jochplatte als Flansch des Aktors, während das den Elektromagneten radial umgebende Aktorgehäuse um die Spule gespritzt wird, wobei die Jochplatte im Spritzvorgang als axiale Begrenzungsfläche dient. Die Verbindung zwischen der Jochplatte und dem Aktorgehäuse findet über den Kern statt, der in die Jochplatte eingepresst ist. Die Herstellung der Flanschverbindung über die Jochplatte bietet den Vorteil, dass nicht der Kunststoffkörper des Aktors verschraubt werden muss und somit eine Undichtigkeit durch Kriechvorgänge des Kunststoffs weitestgehend vermieden wird.

Ein derartiges Ventil, welches als in elektromagnetisch betätigbares Sekundärluftventil dient, wird beispielsweise in der DE 10 2008 050 252 A1 beschrieben. Dieses Ventil regelt mittels eines Hubventils, dessen Ventilstange mit dem Anker des Elektromagneten verbunden ist, eine dem Abgasrohr zuzuführende und von einer Sekundärluftpumpe geförderte Luftmenge, indem ein Durchströmungsquerschnitt zwischen einem Fluideinlasskanal und einem Fluidauslasskanal, der mit dem Abgasrohr verbunden ist, durch Betätigung des Elektromagneten eingestellt wird. Um ein Rückströmen der Luft bei auftretenden Abgaspulsationen zu vermeiden, weist das Ventil eine Rückschlagklappe auf, die bei geschlossenem Ventil gegen den Ventilsitz gedrückt wird. Bei diesem Ventil ist zwischen der Lochplatte und dem Strömungsgehäuse ein O-Ring als Dichtung gepresst, der verhindert, dass Flüssigkeit zwischen diesen Bauteilen eindringen kann und gegebenenfalls zur Spule gelangt und diese beschädigt.

Es hat sich jedoch herausgestellt, dass auch ein Spalt zwischen der Jochplatte und dem gespritzten Aktorgehäuse vorhanden ist, der groß genug ist, dass Spritzwasser von außen in den Aktor eindringen kann und vor allem die elektrischen Bauteile des Elektromagneten geschädigt

Zusätzlich ist aus der US 6,076,550 ein Elektromagentventil bekannt, bei dem zwischen eine den Aktor des Ventils axial begrenzenden Jochplatte und dem Spulenträger ein Dichtring geklemmt ist, der radial außen vom Gehäuse des Ventils umgeben ist. Eine zuverlässige Abdichtung des Spaltes zwischen dem Spulenträger und dem Gehäuse wird nicht erreicht.

Es stellt sich daher die Aufgabe einen Aktor bereitzustellen, bei dem ein Eindringen von Spritzwasser oder Schwallwasser, welches gegebenenfalls mit gelöstem Salz belastet ist, in die elektrischen Bauteile des Aktors zuverlässig verhindert werden kann. Die Abdichtung soll alterungs- und witterungsbeständig sein, so dass die Lebensauer des Aktors erhöht wird.

Diese Aufgabe wird durch einen Aktor für Ventile in Verbrennungskraftmaschinen mit den Merkmalen des Hauptanspruchs gelöst.

Dadurch, dass auf der zum Elektromagneten weisenden axialen Seite der Jochplatte ein Dichtring angeordnet ist, der über eine Klemmplatte, axial in Richtung zur Jochplatte gepresst ist, wobei der Dichtring nach radial innen gegen das Aktorgehäuse anliegt, wird der Spalt zwischen dem Aktorgehäuse und der Jochplatte zuverlässig abgedichtet und somit eine Eindringen von Flüssigkeiten verhindert. Diese Anlage verhindert ein Eindringen von Wasser in den Spalt zwischen Aktorgehäuse und Lochplatte über den axialen Spalt zwischen der Klemmplatte und dem Aktorgehäuse, wodurch die Dichtigkeit zusätzlich erhöht wird.

In einer vorteilhaften Ausführungsform weist die Klemmplatte radial innen eine zur Jochplatte weisende Fase auf, in der der Dichtring angeordnet ist. Beim Anziehen der Klemmplatte entsteht auf diese Weise eine Verpressung des Dichtrings in axialer und in radialer Richtung, was wiederum zu einer Verbesserung der Abdichtung führt.

In einer hierzu alternativen Ausbildung der Erfindung presst eine erste Klemmplatte den Dichtring axial gegen die Jochplatte und eine zweite Klemmplatte begrenzt den Dichtring radial, wobei die zweite Klemmplatten zwischen der ersten Klemmplatte und der Jochplatte angeordnet ist. Diese Ausführung ist besonders kostengünstig herstellbar, da als Klemmplatten unbearbeitete Standardblechringe verwendet werden können. Die radiale Begrenzung durch die zweite Klemmplatte führt beim axialen Verpressen dazu, dass der Dichtring sich in Richtung zum innenliegenden Gehäuse verformt und so auch radial dichtend wirkt.

Dabei entspricht vorzugsweise der Innenumfang der zweiten Klemmplatte dem Außenumfang des Dichtrings im montierten, axial nicht verpressten Zustand, so dass durch den ersten Klemmring die radiale Position des Dichtrings festgelegt und dessen Verformung nach radial außen begrenzt ist.

In einer Weiterbildung der Erfindung ist der Dichtring elastisch und weist im nicht verformten, unmontierten Zustand einen Innenumfang auf, der geringfügig kleiner ist als der Außenumfang des Aktorgehäuses im an die Lochplatte angrenzenden Bereich. Dies bedeutet, dass der Dichtring bei der Montage geringfügig radial gedehnt werden muss, sich jedoch in seiner Endlage aufgrund seiner Elastizität radial gegen das Aktorgehäuse anlegt, wodurch eine geringe erste radiale Dichtwirkung entsteht.

Vorzugsweise sind an den Klemmplatten und der Jochplatte Durchgangsbohrungen ausgebildet, in denen Schrauben angeordnet sind, über die das Aktorgehäuse an einem Strömungsgehäuse befestigt ist. Durch die Schrauben kann auf einfache Weise die Kraft zum Verpressen des Dichtrings zur Erzielung der Dichtwirkung erzeugt werden und gleichzeitig eine lösbare Verbindung zwischen den Gehäusen hergestellt werden.

Zusätzlich ist es vorteilhaft, wenn der Innenumfang der einen Klemmplatte oder der ersten Klemmplatte im Wesentlichen dem Außenumfang des Aktorgehäuse entspricht. So wird eine Auflage auf dem Dichtring sichergestellt und ein radiales Verschieben der Klemmplatte vermieden. Auch wird der Spalt zwischen Gehäuse und den Klemmplatten minimiert.

Eine besonders haltbare Verbindung und Abdichtung wird dadurch erreicht, dass die Klemmplatten aus Metall sind. Undichtigkeiten durch Kriechen eines Kunststoffs aufgrund von Alterung oder erhöhten thermischen Belastungen werden vermieden. Es liegt eine hohe Formbeständigkeit der metallenen Platten vor.

Somit wird ein Aktor für Ventile in Verbrennungskraftmaschinen geschaffen, mit dem eine deutliche Erhöhung der Lebensdauer elektromagnetischer Ventile erreicht wird, da eine Korrosion der elektrischen Bauteile im Ventil aufgrund von außen eindringenden, gegebenenfalls gelöstes Salz beinhaltenden Wassers zuverlässig verhindert wird. Hierfür wird ein besonders einfach und kostengünstig montierbares Dichtungssystem zur Verfügung gestellt.

Zwei Ausführungsbeispiele erfindungsgemäßer Aktoren sind in den Zeichnungen dargestellt und werden nachfolgend beschrieben.
Figur 1 zeigt eine Seitenansicht eines erfindungsgemäßen Aktors in teilweise geschnittener Darstellung.
Figur 2 zeigt einen Ausschnitt eines des Aktors aus Figur 1 in vergrößerter Darstellung.
Figur 3 zeigt einen alternativ zu Figur 2 ausgebildeten Ausschnitt eines erfindungsgemäßen Aktors in geschnittener Darstellung.

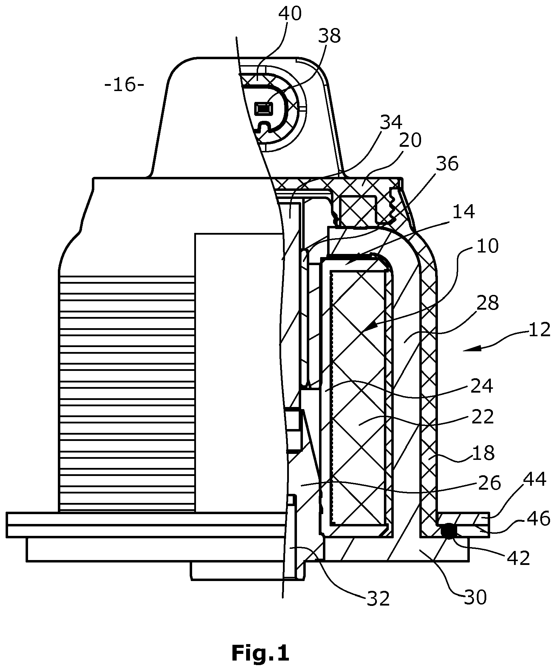

Der in Figur 1 dargestellte Aktor weist einen Elektromagneten 10 auf, der von einem Aktorgehäuse 12 umgeben ist, das einen Innenraum 14, in dem der Elektromagnet 10 angeordnet ist, von einem Außenbereich 16 trennt. Das Aktorgehäuse 12 weist einen den Elektromagneten 10 im Wesentlichen radial umgebenden Gehäuseteil 18 sowie einen Deckelteil 20 auf, mittels dessen das Aktorgehäuse 12 an einem ersten axialen Ende verschlossen wird.

Der Elektromagnet 10 besteht aus einer Spule 22, die auf einem Spulenträger 24 gewickelt ist, einem Kern 26, der im Spulenträger 24 befestigt ist, einem Joch 28 sowie einer am zum ersten axialen Ende gegenüberliegenden Ende des Aktorgehäuses 12 angeordneten Jochplatte 30, welche dieses axiale Ende teilweise verschließt und in vorliegendem Ausführungsbeispiel einstückig mit dem übrigen Joch 28 ausgebildet ist. Eine zweiteilige Ausführung ist ebenfalls möglich.

Die Jochplatte 30 ist mit ihrer zentralen Öffnung auf einen axialen Endabschnitt des Kerns 26 gepresst und im Wesentlichen plattenförmig ausgebildet. Der Kern 26 weist eine zentrale Durchgangsöffnung 32 auf, durch die eine nicht dargestellte Ventilstange einer betätigenden Ventileinheit ragt, die mit einem beweglichen Anker 34 verbunden ist, der durch Bestromen der Spule 22 in Richtung des Kerns 26 gezogen wird und mittels einer nicht dargestellten Feder in entgegengesetzter Richtung belastet ist. Der Anker 34 wird in einer im Innern des Spulenträgers 24 befestigten Gleitbuchse 36 gelagert.

Zur Versorgung der Spule 24 mit Strom aber auch zur Kontaktierung gegebenenfalls integrierter Platinen, Stellungs- oder Drucksensoren sind im Aktorgehäuse 12 Stanzgitter 38 eingelegt oder umspritzt, die in einen Stecker 40 münden, der am Deckelteil 20 ausgebildet ist.

Bei der Herstellung des Gehäuses 14 des Aktors 10 wird zunächst das Deckelteil 20 gespritzt. Anschließend wird das radial den Elektromagneten 10 umgebende Gehäuseteil 18 an das Deckelteil 20 angespritzt, welches an seiner axial entgegengesetzten Seite axial gegen die metallene Jochplatte 30 anliegt.

Wird dieser Aktor zum Antrieb eines Ventils in einem Fahrzeug verwendet, wird er üblicherweise Spritz- oder Schwallwasser ausgesetzt. Da der Kunststoff des Aktorgehäuses 12 lediglich gegen die Jochplatte 30 anliegt, jedoch nicht direkt fest und dichtend mit ihr verbunden ist, entsteht insbesondere bei höherer thermischer Belastung des Aktors ein Spalt zwischen dem Gehäuseteil 18 und der Jochplatte 30, durch welchen Spritzwasser, welches gegebenenfalls mit gelöstem Salz belastet ist, in das Innere des Elektromagneten 10 eindringen kann und dort zu Korrosion führen kann. An dieser Stelle sei darauf hingewiesen, dass das Joch 28 die Spule 22 nicht vollständig radial umgibt, so dass Wasser bis zur Spule 22 und in den Innenraum 14 eindringen kann. Auch eine Befestigung des Gehäuseteils 18 mittels Schrauben an der Jochplatte 30 hat sich diesbezüglich aufgrund des Kriechverhaltens des Kunststoffs als unzureichend dicht erwiesen.

Aus diesem Grund wird erfindungsgemäß axial auf die Jochplatte 30 ein Dichtring 42 aufgesetzt, der radial gegen das Gehäuseteil 18 anliegt. Dieser Dichtring 42 besteht aus einem elastischen Material und weist in seinem nicht montierten Zustand einen Umfang auf, der geringfügig kleiner ist als der Umfang des Gehäuseteils 18 im auf der Lochplatte 30 aufliegenden Bereich. Dies führt dazu, dass der Dichtring 42 im montierten Zustand radial fest gegen das Gehäuseteil 18 anliegt und eine radiale Dichtfunktion erfüllt. Um auch den radial verlaufenden Spalt zwischen dem Dichtring 42 und der Jochplatte 30 sicher abzudichten, wird der Dichtring 42 über eine Klemmplatte 44 aus Metall axial gegen die Jochplatte 30 gepresst. Die radiale Fixierung des Dichtrings 42 erfolgt durch eine zweite Klemmplatte 46, welche axial zwischen der ersten Klemmplatte 44 und der Jochplatte 30 angeordnet ist und deren Innenumfang im Wesentlichen dem Außenumfang des Dichtrings 42 entspricht. Die Dicke dieses zweiten Klemmrings 46 ist geringer als die Dicke des Dichtrings 42 im nicht zusammengepressten Zustand.

Die beiden Klemmplatten 44, 46 und die Jochplatte 30 weisen Flanschaugen auf, durch deren Öffnungen Schrauben gesteckt werden, die an einem Strömungsgehäuse des jeweils zu betätigenden Ventils befestigt werden, auf dem die Jochplatte 30 aufliegt. Durch die Anzugskraft dieser Schrauben wird die Klemmkraft der Klemmplatten 44, 46 und somit die Verpressung des Dichtrings 42 erzeugt. Die Dichtwirkung des Dichtrings 42 entlang des axialen Spaltes zwischen dem Gehäuseteil 18 und dem Dichtring 42 wird bei diesem Anziehen der Schrauben ebenfalls deutlich verstärkt, da eine Ausdehnung des Dichtrings 42 nach radial außen aufgrund des zweiten Klemmrings 46 nicht möglich ist, so dass der Dichtring 42 sich flächig radial gegen das Gehäuseteil 18 anlegt und den dortigen Spalt ebenso abdichtet wie den radialen Spalt zwischen der Jochplatte 30 und dem Dichtring 42. Somit kann kein Wasser zwischen dem Gehäuseteil 18 und der Jochplatte 30 in das Innere des Aktors eindringen.

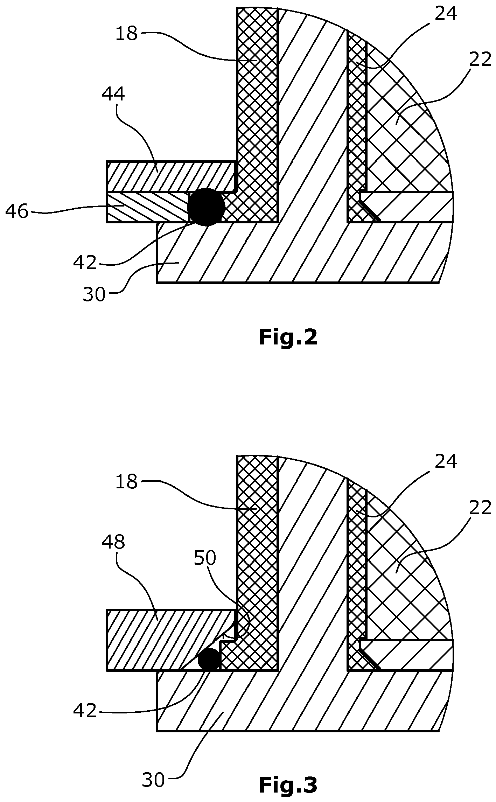

Eine alternative Abdichtung ist in der Figur 3 dargestellt. Statt der zwei Klemmplatten wird bei dieser Ausführungsform lediglich eine Klemmplatte 48 verwendet, welche an ihrem radialen innen liegendem Umfang eine zur Jochplatte 30 gerichtete Fase 50 aufweist. In diesem durch die Fase 50 entstehendem Hohlraum wird der Dichtring 42 angeordnet. Beim Anziehen der Schrauben wird dieser Dichtring 42 durch die schräge Wand der Fase 50 sowohl axial in Richtung der Jochplatte 30 als auch radial nach innen in Richtung des Gehäuseteils 18 gepresst und dichtet in gleicher Weise die beiden Spalte ab.

Somit wird ein Aktor geschaffen, bei dem ein Eindringen von Schwall- oder Spritzwasser in den Innenraum des Aktors zuverlässig vermieden wird. Entsprechend wird eine Korrosion der elektrischen und magnetischen Bauteile der Leitungen und der Spule des Elektromagneten verhindert, wodurch die Lebensdauer des Aktors erhöht wird. Diese Abdichtfunktionen werden erreicht, ohne dass größere Montage- oder Herstellkosten erforderlich sind. Eine Alterung dieser Abdichtung wird durch die Verwendung der metallenen Klemmplatten vermieden, da die Dichtwirkung durch das Kriechverhalten eines Kunststoffs nicht beeinflusst wird.

Es sollte deutlich sein, dass sich diese Form der Abdichtung für beinahe alle elektromagnetischen Aktoren eignet. Der Schutzbereich der vorliegenden Anmeldung ist nicht auf die beschriebenen Ausführungsbeispiele begrenzt. Konstruktive Anpassungen des Gehäuses oder des Aufbaus des Elektromagneten sind für den Fachmann ersichtlich und durchführbar, ohne den Schutzbereich des Hauptanspruchs zu verlassen.

## Patentansprüche

1. Aktor für Ventile in Verbrennungskraftmaschinen mit
einem Elektromagneten (10),
einem Aktorgehäuse (12), in welchem der Elektromagnet (10) angeordnet ist,
und einer Jochplatte (30) des Elektromagneten (10), welche an einem axialen Ende des Aktorgehäuses (12) angeordnet ist,
**dadurch gekennzeichnet, dass**
auf der zum Elektromagneten (10) weisenden axialen Seite der Jochplatte (30) ein Dichtring (42) angeordnet ist, der über eine Klemmplatte (44; 48), axial In Richtung zur Jochplatte (30) gegen die Jochplatte (30) gepresst ist, wobei der Dichtring (42) nach radial innen gegen das Aktorgehäuse (12) anliegt.

2. Aktor für Ventile in Verbrennungskraftmaschinen nach Anspruch 1,
**dadurch gekennzeichnet, dass**
die Klemmplatte (48) radial innen eine zur Jochplatte (30) weisende Fase (50) aufweist, in der der Dichtring (42) angeordnet ist.

3. Aktor für Ventile in Verbrennungskraftmaschinen nach Anspruch 1,
**dadurch gekennzeichnet, dass**
eine erste Klemmplatte (44) den Dichtring (42) axial gegen die Jochplatte (30) presst und eine zweite Klemmplatte (46) den Dichtring (42) radial begrenzt, wobei die zweite Klemmplatte (46) zwischen der ersten Klemmplatte (44) und der Jochplatte (30) angeordnet ist.

4. Aktor für Ventile in Verbrennungskraftmaschinen nach Anspruch 3,
**dadurch gekennzeichnet, dass**
der Innenumfang der zweiten Klemmplatte (46) dem Außenumfang des Dichtrings (42) im montierten, axial nicht verpressten Zustand entspricht.

5. Aktor für Ventile in Verbrennungskraftmaschinen nach einem der vorhergehenden Ansprüche,
**dadurch gekennzeichnet, dass**
der Dichtring (42) elastisch ist und im nicht verformten, unmontierten Zustand einen Innenumfang aufweist, der geringfügig kleiner ist als der Außenumfang des Aktorgehäuses (12) im an die Jochplatte (30) angrenzenden Bereich.

6. Aktor für Ventile in Verbrennungskraftmaschinen nach einem der vorhergehenden Ansprüche,
**dadurch gekennzeichnet, dass**
an den Klemmplatten (44, 46; 48) und der Jochplatte (30) Durchgangsbohrungen ausgebildet sind, in denen Schrauben angeordnet sind, über die das Aktorgehäuse (12) an einem Strömungsgehäuse befestigt ist.

7. Aktor für Ventile in Verbrennungskraftmaschinen nach einem der vorhergehenden Ansprüche,
**dadurch gekennzeichnet, dass**
der Innenumfang der einen Klemmplatte (48) oder der ersten Klemmplatte (44) im Wesentlichen dem Außenumfang des Aktorgehäuses (12) entspricht.

8. Aktor für Ventile in Verbrennungskraftmaschinen nach einem der vorhergehenden Ansprüche,
**dadurch gekennzeichnet, dass**
die Klemmplatten (44, 46; 48) aus Metall sind.

## Claims

1. An actuator for valves in internal combustion engines comprising
an electromagnet (10),
an actuator housing (12) in which said electromagnet (10) is arranged,
and a yoke plate (30) of said electromagnet (10), which is arranged at an axial end of said actuator housing (12),
**characterized in that**
at the axial side of said yoke plate (30) facing said electromagnet (10) a sealing ring (42) is arranged which, via a clamping plate (44; 48), is axially pressed towards said yoke plate (30) against said yoke plate (30), wherein the sealing ring (42) radially inwardly rests upon the actuator housing (12).

2. The actuator for valves in internal combustion engines according to claim 1, **characterized in that** the clamping plate (48) radially inwardly comprises a chamfer (50) facing the yoke plate (30), in which the sealing ring (42) is arranged.

3. The actuator for valves in internal combustion engines according to claim 1, **characterized in that** a first clamping plate (44) axially presses the sealing ring (42) against the yoke plate (30) and a second clamping plate (46) radially delimits the sealing ring (42), wherein said second clamping plate (46) is arranged between said first clamping plate (44) and said yoke plate (30).

4. The actuator for valves in internal combustion engines according to claim 3, **characterized in that** the inner circumference of the second clamping plate (46) corresponds to the outer circumference of the sealing ring (42) in the state as installed and not axially pressed in.

5. The actuator for valves in internal combustion engines according to any one of the preceding claims, **characterized in that** the sealing ring (42) is elastic and comprises, in the non-deformed and non-installed state, an inner circumference which is slightly smaller than the outer circumference of the actuator housing (12) in the area adjacent to the yoke plate (30).

6. The actuator for valves in internal combustion engines according to any one of the preceding claims, **characterized in that** at the clamping plates (44, 46; 48) and the yoke plate (30) through-going bores are defined in which screws are arranged via which the actuator housing (12) is fastened to a flow housing.

7. The actuator for valves in internal combustion engines according to any one of the preceding claims, **characterized in that** the inner circumference of the one clamping plate (48) or the first clamping plate (44) essentially corresponds to the outer circumference of the actuator housing (12).

8. The actuator for valves in internal combustion engines according to any one of the preceding claims, **characterized in that** the clamping plates (44, 46; 48) are made of metal.

## Revendications

1. Actionneur pour soupapes dans des moteurs à combustion interne, comportant
un électroaimant (10),
un carter d'actionneur (12) dans lequel ledit électroaimant (10) est disposé,
et une plaque de culasse (30) dudit électroaimant (10), disposée sur une extrémité axiale dudit carter d'actionneur (12),
**caractérisé en ce que**
une bague d'étanchéité (42) est disposée au coté axial de la plaque de culasse (30) tourné vers ledit électroaimant (10), ladite bague étant pressée axialement vers la plaque de coulisse (30) contre la plaque de coulisse (30) par moyen d'une plaque de serrage (44; 48), ladite bague d'étanchéité (42) restant radialement vers l'intérieur contre le carter d'actionneur (12).

2. Actionneur pour soupapes dans des moteurs à combustion interne selon la revendication 1, **caractérisé en ce que**, radialement à l'intérieur, la plaque de serrage (48) comporte un chanfrein (50) tourné vers la plaque de culasse (30), ladite bague d'étanchéité (42) étant disposée dans ledit chanfrein.

3. Actionneur pour soupapes dans des moteurs à combustion interne selon la revendication 1, **caractérisé en ce qu'**une première plaque de serrage (44) presse la bague d'étanchéité (42) axialement contre la plaque de culasse (30), et une deuxième plaque de serrage (46) délimite la bague d'étanchéité (42) radialement, la deuxième plaque de serrage (46) étant disposée entre la première plaque de serrage (44) et la plaque de culasse (30).

4. Actionneur pour soupapes dans des moteurs à combustion interne selon la revendication 3, **caractérisé en ce que** la circonférence intérieure de ladite deuxième plaque de serrage (46) correspond à la circonférence extérieure de la bague d'étanchéité (42) dans l'état monté, mais non pressé axialement.

5. Actionneur pour soupapes dans des moteurs à combustion interne selon l'une quelconque des revendications précédentes, **caractérisé en ce que** la bague d'étanchéité (42) est élastique et, dans l'état non déformé et non monté, présent une circonférence intérieure qui est faiblement plus petite que la circonférence extérieure du carter d'actionneur (12) dans la région voisine à la plaque de culasse (30).

6. Actionneur pour soupapes dans des moteurs à combustion interne selon l'une quelconque des revendications précédentes, **caractérisé en ce que** des alésages de passage sont formés dans les plaques de serrage (44, 46; 48) et la plaque de culasse (30), dans lesquelles des vis sont disposés par lesquels le carter d'actionneur (12) est fixé à un carter d'écoulement.

7. Actionneur pour soupapes dans des moteurs à combustion interne selon l'une quelconque des revendications précédentes, **caractérisé en ce que** la circonférence intérieure de l'une des plaques de serrage (48) ou de la première plaque de serrage (44) correspond sensiblement à la circonférence extérieure du carter d'actionneur (12).

8. Actionneur pour soupapes dans des moteurs à combustion interne selon l'une quelconque des revendications précédentes, **caractérisé en ce que** les plaques de serrage (44, 46; 48) sont en métal.
